# EUROPEAN PATENT SPECIFICATION

(11) **EP 0 588 213 B1**
(45) Date of publication and mention of the grant of the patent: **18.12.1996**
(21) Application number: 93114332.5
(22) Date of filing: 07.09.1993
(51) Int. Cl.: H02P 5/40, G01R 31/34

(54) **Method for measuring characteristic constants of alternating current motor and controller thereof based on said method**
Verfahren zur Messung charakteristischer Konstanten für Wechselstrommotoren und auf diesem Verfahren basierender Regler
Méthode de mesure des constantes charactéristiques pour moteur à courant alternatif et contrôleur à base de cette méthode

(30) Priority: 16.09.1992 JP 246147/92; 12.03.1993 JP 51612/93
(43) Date of publication of application: 23.03.1994
(73) Proprietor: HITACHI, LTD., Chiyoda-ku, Tokyo 101 (JP)
(72) Inventor: Sakai, Keijiro, Hitachioota-shi, Ibaraki 313 (JP); Endo, Tsunehiro, Hitachioota-shi, Ibaraki 313 (JP); Okuyama, Toshiaki, Naka-gun, Ibaraki 319-11 (JP); Fujii, Hiroshi, Chiba-shi, Chiba 262 (JP)
(74) Representative: Beetz & Partner Patentanwälte

(56) References cited:
- EP-A- 0 250 799
- CONFERENCE RECORD OF THE 1989 IEEE INDUSTRY APPLICATIONS SOCIETY ANNUAL MEETING, 5 October 1989, San Diego US, pp. 7-11; T. KATAOKA et al.: 'Starting performance prediction of an inverter fed induction motor'
- IEEE TRANSACTIONS ON INDUSTRY APPLICATIONS, vol. 28, no. 3, June 1992, New York US, pp. 581-588; U. BAADER et al.: 'Direct Self Control (DSC) of Inverter-Fed Induction Machine: A Basis for Speed Control Without Speed Measurement'
- PATENT ABSTRACTS OF JAPAN vol. 10, no. 268 (E-436) 12 September 1986 & JP-A-61 092 185
- PATENT ABSTRACTS OF JAPAN vol. 10, no. 24 (E-377) 30 January 1986 & JP-A-60 183 953
- PATENT ABSTRACTS OF JAPAN vol. 18, no. 92 (P-1693) 15 February 1994 & JP-A-05 297 079

## Description

The present invention relates to methods for measuring characteristic constants of an alternating current motor such as a three phase induction motor, said constants being at least one of a primary and secondary combined leakage inductance (l₁ + l₂), resistances r₁, r₂, a combined resistance (r₁ + r₂) thereof, and self-inductance L₁ which are used as control constants for a speed sensorless vector control of the motor by using a voltage command value of an inverter apparatus for controlling the speed of the motor. The invention relates further to controllers applying the above methods.

Generally, it has been required for the inverter or the like used for variable speed control of an induction motor to improve high torque starting and speed control characteristic at a low speed. In order to meet the requirement, sensorless vector control has come into wide use where speed control is carried out without using any speed sensor nor any terminal voltage sensor of a motor, by means of controlling the induced voltage Em of an induction motor to keep at constant and giving the slip frequency being proportional to torque current thereto.

In order to carry out a constant induced voltage Em in such a control system, it is required to determine a primary voltage with compensating a voltage drop in an impedance on the primary side and to set up the motor constants, primary resistance r₁ and leakage inductance ( l₁ + l₂ ). In order to calculate a slip frequency command, a secondary resistance r₂ is needed to set up by means of reducing a measured value r₁ from a measured value ( r₁ + r₂ ).

Further, a generalized inverter may be required as a load to drive a motor, domestic- or foreign-made, the motor constants of which are not known. In this case, before normal use operation the motor constants are measured by using an inverter, and the constants are established as control constants and then the motor is operated with sensorless vector control. Such a method of measuring the primary and secondary combined leakage inductance ( l₁ + l₂ ) and the primary and secondary combined resistance ( r₁ + r₂ ) is described, for example, in Japanese Patent Laid-open No.60-183953 (1985).

Therein, an alternating current motor is energized by three-phase excitation under the stopped state of the motor ( primary frequency = slip frequency ) by using a three-phase inverter, and then the values ( l₁ + l₂ ) and ( r₁ + r₂ ) are calculatingly measured from an output of an inverter output voltage detector and a detected value of the motor current.

Since this method needs an inverter output voltage sensor, the method is difficult to apply to a generalized inverter which does not have any voltage sensor. Further, when the inverter output voltage is increased at a low load operation, the motor initiates to rotate due to three-phase excitation, which arises a problem of being incapable of measuring the constants. In order to avoid this problem, there is a method where the motor constants are calculatingly measured from a detected inverter output voltage and a detected motor current when the motor is energized with single-phase excitation in order to prevent motor rotation, which has been disclosed in the report, " An automatic measurement of motor constants for speed sensorless vector control: 1992 National Convention Record I.E.E. Japan, No.619".

In this method, the fundamental wave components of voltage Va and Vb are obtained by means of the general Fourier transform since the inverter output voltage is an alternating voltage formed of a pulse width modulation voltage. Similarly, the fundamental wave components of current Ia and Ib are obtained by means of Fourier transform. In this case, the detection errors in Va and Vb may depend on the sampling frequency of input voltage since the inverter output voltage is a pulse width modulation voltage. Therefore, the values Va, Vb, Ia and Ib are detected 256 times for each value and ( l₁ + l₂ ) and ( r₁ + r₂ ) are calculatingly measured based on each of these average values.

This method may be accurate, since the actual fundamental wave voltage of the pulse width modulation applied to the motor is detected. However, the method also needs an inverter output voltage sensor as well as the former method described above, which leads to high cost. Further, since the fundamental wave voltage and current are obtained by means of Fourier transform, the accuracy in detected values may vary depending on the sampling frequency. Since the sampling cycle is needed to shorten in order to improve accuracy, a comparatively high speed microprocessing unit may be required to perform alternating excitation operation and calculating operations for Va, Vb, Ia and Ib every cycle. Furthermore, since each of the values Va, Vb, Ia and Ib is obtained through averaging 256 detected values, the measurement takes, for example, 0.02 second × 256 = approximately 5 seconds when the alternating current excitation is performed with primary frequency f₁ = 50 Hz, which causes a disadvantage in that the measuring time is a little longer.

A previous method on measuring a primary self-inductance L₁(=M+l₁), which is one of various measuring constants of a motor, is calculatingly measured from a motor terminal voltage and a non-load current under a normal operating condition of the sole motor ( non-load condition ) as described in the above Convention Record.

The conventional method on measuring a primary self-inductance L₁ described above has disadvantages in incapability of measuring under a load condition. Therefore, in a case where a generalized inverter is connected with various loads, there are disadvantages to measure the constant.

On the other hand, a method on measuring a primary self-inductance under a load condition is described in Japanese Patent Laid-open No.61-92185 (1986). According to the method wherein a motor has a motor terminal voltage detector, the primary self-inductance is calculatingly measured from an output of the motor terminal voltage detector and a detected motor current under the condition of controlling the primary frequency such that, by detecting an induced voltage vector, the direction of the secondary inter-linkage magnetic flux of the vector may result in zero.

Although the conventional method described as above is capable of measuring the primary self-inductance under a load condition, the method requires to measure under a condition where the direction of the secondary inter-linkage magnetic flux component of the induced voltage vector. In order to detect the magnetic flux direction component, the motor terminal voltage are required to detect in an alternating current state and to convert three-phase alternating current into direct current for measuring. Therefore, there are disadvantages in incapability of measuring a primary self-inductance in a case of using a generalized inverter without voltage detectors in the output side of the inverter.

Prior art document "Conference Record of the 1989 IEEE Industry Applications Society Annual Meeting" of 5th October 1989, San Diego, USA, pages 7 to 11, Teruo Kataoka et alii "Starting Performance Prediction of an Inverter-fed Induction Motor" describes approaches to predict the starting performance of interver-fed induction motors. Proposed is a method of predicting the starting performance of such motors by employing a measurement system to determine the parameters of the fundamental and harmonic equivalent circuits of induction motors. By considering the frequency characteristics of the rotor resistance and rotor leakage inductance as well as the effect of magnetic saturation on the exciting inductance, the starting performance of the motors can be predicted. The paper shows fundamental and harmonic equivalent circuits of an induction motor at standstill. They are used to predict the starting performance of the motor. What is considered are stator and rotor resistance and leakage inductance, both for the fundamental frequency and for the harmonics as well as iron loss resistance and exciting inductance. These equivalent circuit parameters are determined by performing no load tests and locked rotor tests as various frequencies up to the rated frequency. In these tests, two line-to-line voltages and two line current waveforms of the three phase induction motor are detected, sampled and converted to digital form and then deposited in a memory of the control computer.

It is the object of the present invention to provide a measuring method for characteristic constants of an alternating current motor not requiring any voltage detector for detecting the output voltage of the inverter. Another object of the present invention is to provide a method of measuring these values in a short time by using a low speed and low cost single chip microprocessor.

This object is solved in accordance with the features of the independent claims 1, 5, 6 and 9. Dependent claims are directed on preferred embodiment of the invention.

According to one method, an induction motor is energized in a manner of a single-phase alternating current excitation by using an inverter without any inverter output voltage sensor, and the characteristic constants such as r₁, r₂, (r₁ + r₂), (l₁ + l₂) or L₁ are calculatingly measured based on a magnitude of alternating current voltage command V_{1c}, an active power component of current Iq and a reactive power component of current Id.

A single-phase alternating current excitation is performed with a method wherein an identical pulse signal is supplied to V-phase and W-phase, and a sine wave modulated pulse width modulation signal is supplied only to U-phase. In order to improve measuring accuracy, the actual output voltage of the inverter is needed to output accurately the same voltage as the inverter output voltage command since the inverter is of an inverter output voltage sensorless type. Therefore, the system is composed so that the voltage error may be corrected by use of the dead time which is provided to avoid short-circuit of the positive- and negative-arms of power elements. In addition to this, the alternating current excitation voltage itself is comparatively small even when the rated current flows since the values ( r₁ + r₂ ) and ( l₁ + l₂ ) are measured under the condition of the induction motor of slip one ( rotationally stopped state ) and then the impedance of the secondary circuit of the induction motor is small. For this reason, the ON-sate voltage drop in the power elements is not negligible. Therefore, the system is composed so that the pulse width may be corrected depending on the current polarity in the U-phase of the motor by the sum of the output voltage error caused by the dead time and the output voltage error caused by the ON-state voltage drop in the power elements.

Here, both the active power component of current Iq and the reactive power component of current Id are calculated with a manner wherein, providing θ as the rotational phase of the alternating current excitation voltage vector against a fixed coordinate axis and iu as the detected instantaneous current on the sine wave modulated phase, the active power component of current Iq is obtained by averaging the value of integration of sinθ•iu over the interval of one cycle of the primary frequency and the reactive power component of current Id is obtained by averaging the value of integration of - cosθ•iu over the interval of one cycle of the primary frequency.

Furthermore, the inverter is operated based on a primary angular frequency command ω₁ and a primary voltage command V_{1c} to operate an alternating current motor in a normal condition. In this condition, the component of inverter primary voltage vector direction of the motor current vector I₁ (active power component of current Iq' ) and the 90° delayed component of the inverter primary voltage vector direction of the motor current vector (reactive power component of current Id' ) are calculated from the phase obtained by integrating the primary angular frequency command and the measured current in the alternating current motor, and then a primary self-inductance L₁ of the motor is calculatingly measured based on the primary angular frequency command ω₁, the primary voltage command V_{1c} ( or the detected primary voltage V₁ ), the active power component of current Iq' and the reactive power component of current Id'. Practical equation used for the calculating measurement will be explained later.

Firstly, both the V-phase and the W-phase are of zero Volt potential, since the terminal voltage on the positive side
( +Vdc/2 Volt ) and the terminal voltage on the negative side
( -Vdc/2 Volt ) of the inverter input voltage Vdc are applied when an identical pulse signal having the conduction rate of 1/2 is applied to the V-phase and the W-phase. On the other hand, by performing the sine wave modulation to the U-phase, the single-phase voltage having a nearly sine wave is applied between the U-VW phases of the motor and the current in the motor flows under the stopped state ( slip = 1) of the motor. Therein, since the impedance of the circuit on the secondary side is small under the state of slip = 1 as understood from an equivalent circuit, the current flowing in the mutual inductance is small enough to be able to approximate as being in an open condition. And the V-phase and the W-phase are connected in parallel, which is equivalent to a series circuit of a resistance 1.5( r₁ + r₂ ) and a leakage inductance 1.5( l₁ + l₂ ) whereon the alternating current is applied. Further, as the impedance of the motor winding is small under the state of slip=1, the rated current flows when the alternating current excitation voltage is comparatively small.

Next, when the current in the U-phase of the motor is positive, a negative voltage error takes place in the U-phase due to the dead time and the ON-state voltage drop in the elements. In this moment, on the other hand, a positive voltage errors take place in both the V-phase and the W-phase since the current in the V-phase and the W-phase are negative. Therefore, the inverter is operated under a condition where the U-phase has a wider pulse width than the pulse width of the fundamental pulse width modulation signal by the magnitude of the negative voltage error ( output voltage is increased ) and the V-phase and the W-phase have a narrower pulse width than the pulse width of the 1/2 conduction rate by the magnitude of the positive errors ( output voltage is decreased ). Incidentally, as the opposite phenomena takes place when the current in the U-phase of the motor is negative, the correction is performed so as to narrow the pulse width in the U-phase and to widen the pulse width in the V-phase and the W-phase. As a result, the magnitude of the actual inverter output voltage ( voltage between the terminals U-VW of the motor ) becomes approximately equal to the magnitude of the alternating current excitation voltage command V_{1c}.

Further, the active power of the motor is the averaged value for the integration of the product of the instantaneous alternating current excitation voltage v₁ and the instantaneous current on the U-phase iᵤ over the one-cycle interval of the primary frequency. Therein, the instantaneous power v₁•iᵤ is composed of only the component of the fundamental wave, since the value v₁ is approximately a sine wave voltage and composed of only the component of the fundamental wave due to the correction of dead time, though the value iᵤ is of a distorted wave due to the single-phase excitation. therefore, the active power component of current Iq is obtained by means of dividing the active power by the magnitude of the excitation voltage v₁. Concretely explaining, the Iq may be obtained with a method wherein the values sinθ•iᵤ, providing θ as the rotational phase command for the excitation voltage vector against the fixed coordinate axis, are sampled and accumulated with an arbitrary sampling frequency within the one-cycle interval of the primary frequency, and then the accumulated value is divided by the number of the accumulation. on the other hand, the reactive power component of current Id is obtained by means of dividing the reactive power by the value V₁. Concretely explaining, the Id may be obtained with a method wherein the values -cosθ•iᵤ are accumulated and the accumulated value is divided by the number of the accumulation.

Thus, ( r₁ + r₂ ) is calculated from the ratio of vc₁•Iq and
( Id² + Iq² ),and ( l₁ + l₂ ) is calculated from the ratio of
V_{1c}•Id and ω( Id² + Iq² ). As described above, the values ( r₁ + r₂ ) and ( l₁ + l₂ ) are accurately measured with an inverter output voltage sensorless, since the magnitude of the actual inverter output voltage V₁ ( the voltage between the terminals U-VW of a motor ) is nearly equal to the magnitude of the excitation voltage command V_{1c} and the values Id and Iq are of the component of the fundamental wave.

Next, in means for calculatingly measuring primary self-inductance L₁ the motor is accelerated by the inverter with a V₁/f₁-constant control in which the ratio of the primary voltage V₁ and the primary frequency f₁ is kept constant, and then operated in the normal operation condition near a rated frequency. In this occasion, a pulse width modulation signal of the inverter is directly output based on the phase of the primary voltage vector obtained by integrating the primary frequency command, and the primary current vector I₁ is converted from three phase current to direct current based on the primary voltage vector. Therein, the primary voltage is directly output based on the phase of the primary voltage vector, the component of primary voltage vector direction of the primary current vector I₁ ( active power component of current Iq' ) and the component of 90° delayed direction from the primary voltage vector direction of the primary current vector ( reactive power component of current Id' ) are obtained from the phase, which leads to detecting the accurate Iq' and Id' due to no effect of the internal impedance of the motor. Further, the primary self-inductance L₁ is calculated from the equation obtained based on the a voltage versus current diagram of the induction motor in the normal operation. In this case, although Iq' and Id' vary depending on the load, L₁ can accurately be measured not depending on the load since calculating measuring can be performed based on the accurate values of Iq' and Id'.

FIG.1 is a control block diagram showing one embodiment in accordance with the present invention.

FIG.2 is a detailed block diagram of a single-phase alternating current excitation operation means 10 shown in FIG.1.

FIG.3 is a partial structural diagram of the Fig. 1 including an inverter 4.

FIG.4 is a graph explaining ON-state voltage drop in a power element shown in FIG.3.

FIGS.5A and 5B are a diagram explaining the cause of voltage error by ON-state voltage drop described in FIG.3.

FIG.6 is an equivalent circuit diagram for one phase portion of an induction motor 5 shown in Fig. 1.

FIG.7 is an equivalent circuit diagram of the motor 5 in a state of single phase alternating current excitation in accordance with the present invention.

FIG.8 is a voltage- and current-vector diagram in a state of single phase alternating current excitation in accordance with the present invention.

FIG.9 are graphs showing characteristic constants of the motor 5 obtained by an experiment by means of a measuring method in accordance with the present invention.

FIG.10 is a detailed flow chart for obtaining further characteristic constants r₁, r₂, L₁ based on the constants ( r₁ + r₂ ), ( l₁ + l₂ ) in the present invention.

FIG.ll is a control block diagram showing an embodiment of an apparatus for obtaining the further constants in accordance with the present invention.

FIG.12 is a voltage-current vector diagram of an induction motor 5 at normal loaded operation shown in Fig. 11.

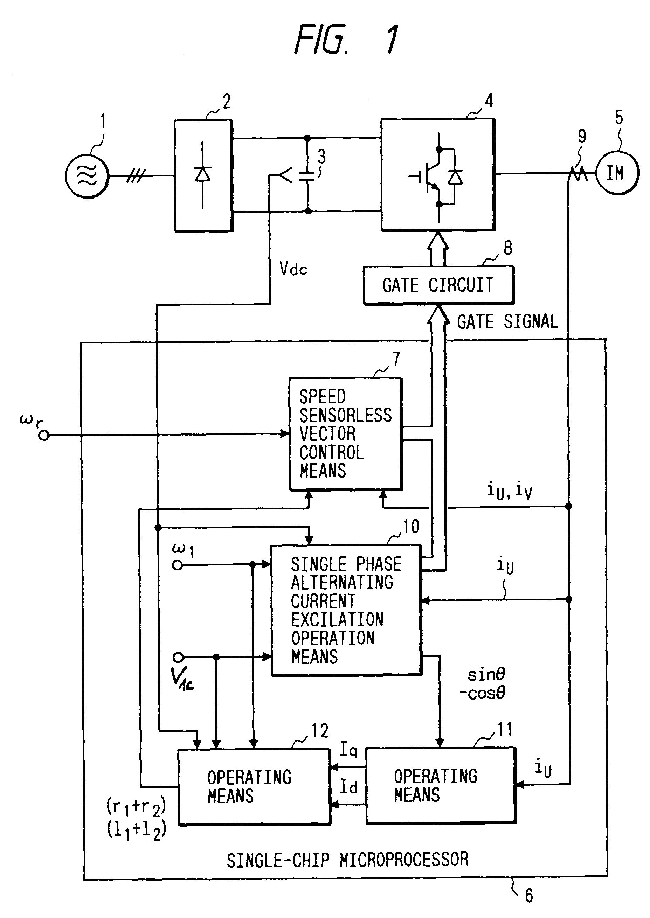

The present invention will be described in detail below, referring to the accompanying drawings. In FIG.1, the power from an alternating current power supply 1 is converted into direct current through a rectifier circuit 2 and a smoothing capacitor 3. In a normal operation, an alternating voltage is generated by means of controlling inverter input voltage Vdc with a pulse width modulation control using an inverter 4, and an induction motor 5 is controlled in a manner of variable speed control. In a normal operation, a speed sensorless vector control operation 7 is performed with a control circuit 6 of a single-chip microprocessor such as to follow a speed command ωᵣ and generates pulse width modulation signals in a gate circuit 8. Therein, the control is generally carried out based on a primary resistance setting value or a measured value r₁, a measured combined resistance
( r₁ + r₂ ), a measured combined leakage inductance ( l₁ + l₂ ), the other motor constant setting values and an output of a motor current detector 9. In the speed sensorless vector control operation, a primary voltage command for the motor is output with correcting the voltage drop by the impedance on the primary side such that the induced voltage of the induction motor Em is basically kept constant. Further, the speed control is preformed by giving a slip frequency being proportional to the current contributing to the torque, and the pulse width modulation signals are output based on the magnitude of a primary voltage vector and a frequency command. In such a speed control, a method and an apparatus of measuring a primary and secondary combined resistance and a combined leakage inductance, which are the main part of the present invention, will be described below. Before the normal operation, the values ( r₁ + r₂ ) and ( l₁ + l₂ ) are measured by using the inverter 4 in order to use them as the motor constants for the speed sensorless vector control. Firstly, a sine wave modulation signal is generated by a single-phase alternating current excitation operation means 10 to operate the inverter 4 through the gate circuit 8, and then the alternating current is supplied to the motor 5 with an alternating excitation voltage. In an operating means 11 for calculating active power component of current Iq and reactive power component of current Id, the values Iq and Id are calculated as explained later based on sinθ, -cosθ and current iᵤ flowing the U-phase of the motor 5 detected when excited by the single-phase alternating current, providing θ as the rotational phase of the alternating current excitation voltage vector obtained by integrating a primary frequency command ω₁. Next in an operating means 12 for calculating primary and secondary combined resistance and combined leakage inductance, the values ( r₁ + r₂ ) and ( l₁ + l₂ ) are calculated as explained later from the calculated values Iq and Id and the magnitude of an excitation voltage command V_{1c} to use them as the control constants for the speed sensorless vector control means 7. Here, the secondary resistance r₂ is obtained by setting l₁ = l₂ = ( l₁ + l₂ )/2 as generally known, using the primary resistance r₁ measured in advance or preset and the measured value ( r₁ + r₂ ), and subtracting r₁ therefrom.

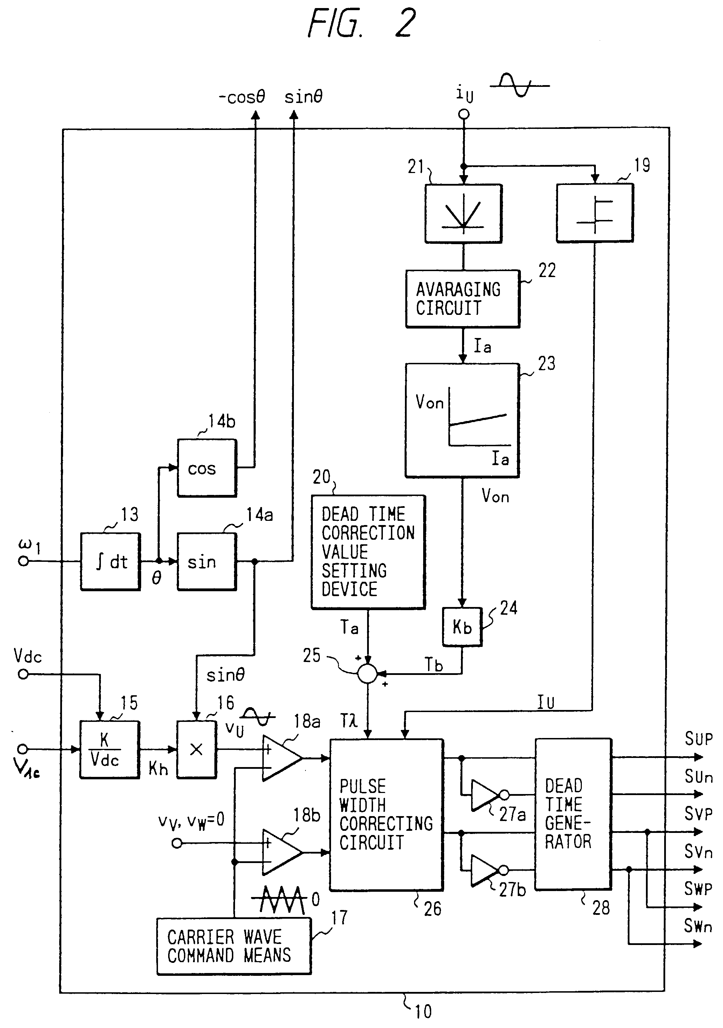

A method for a single-phase alternating current excitation will be described below. FIG.2 shows the detail of the single-phase alternating current excitation operation means 10. The primary frequency command ω₁ is integrated, by an integrating operation means 13, the output of which is dealt as the rotational phase θ for the alternating current excitation voltage vector. And sinθ is generated in a sin function means 14a and - cosθ is generated in a -cos function means 14b. The magnitude of the alternating current excitation voltage command ( root mean square value V_{1c} )is divided by an inverter input voltage Vdc in a dividing operation means 15 to produce the magnitude of a modulation wave command ( ratio of the peak value of a modulation wave against the peak value of a carrier wave ) Kh, which is multiplied by sinθ to produce a modulating signal vu having sine wave shape. Therein, there is a relation Kh = 2.83 • V_{1c} / Vdc because of sine wave modulation. The vu is compared with the output of a carrier wave command means 17 added to a comparing operation means 18a to produce a sine wave pulse width modulation signal. On the other hand, the V-phase and the W-phase are compared with the zero-modulation wave added to a comparing operation means 18b to produce a pulse width signal having the conduction rate of 1/2.

An current polarity discrimination operation means 19 outputs the polarity of the motor current iu. The average value of iu, that is Ia, is produced by an absolute value operation means 21 and an averaging operation means 22, which produces the magnitude of an ON-state voltage drop Von of the power elements through an ON-state voltage calculating operation means 23. A pulse width Tb corresponding to the ON-state voltage drop of the power elements is calculated through a means 24 having a gain k_{b}. Therein, when the inverter voltage Vdc largely fluctuates, the Tb is corrected by dividing Vdc. The output Ta from a dead time correction value setting device 20 is determined the following equation.$\text{Ta = Td + Ton - Toff}$

Where, Td is a dead time provided to prevent short-circuit between positive- and negative-arms of the power elements. Ton is an actuation delay time for turn-on of both the gate circuit 8 and the power elements. Toff is an actuation delay time for turn-off of both the gate circuit and the power elements. A pulse width correcting operation means 26 corrects the pulse width outputs from the comparing operation means 18a and 18b by the pulse width correction Tλ which is the sum of Ta and Tb. Therein, a negative voltage error is produced in the U-phase when iu is positive due to the dead time and the ON-state voltage drop of the power elements, and positive voltage errors are produced in both the V-phase and the W-phase due to the negative motor current. Therefore, the pulse width in the fundamental pulse width modulation signal for the U-phase is widened by the pulse width correction Tλ ( increasing output voltage ), and the pulse widths in the conduction rate of 1/2 for the V-phase and the W-phase are narrowed by the magnitude of Tλ ( decreasing output voltage ). On the other hand, when the motor current in the U-phase is negative, the pulse width in the U-phase is narrowed and the pulse widths in the V-phase and the W-phase are widened due to the reversal phenomena described above. The output of the pulse width correcting operation means 26 produces a three-phase gate circuit input signal through inverting operation means 27a and 27b and a dead time generating operation means 28. The operation means described above may be provided with a software of a single-chip microprocessor 6. Furthermore, the sine function means and the like may be tabulated in an internal read-only memory, and the operation means to generate the pulse width modulating signal may be provided by an internal timer.

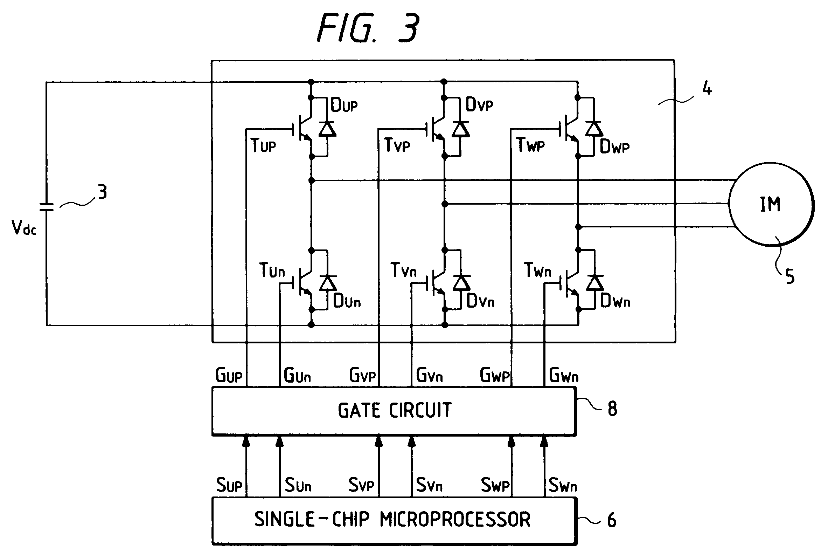

FIG.3 shows a structure of main circuit of an inverter. The value Ton described by the equation 1 is the actuation delay time from the time when the gate circuit input signal Sup is switched from OFF-signal to ON-signal to the time when the transistor composing the power element is switched on. And Toff is the actuation delay time from the time when the gate circuit input signal Sup is switched from ON-signal to OFF-signal to the time when the transistor Tup composing the power element is switched off.

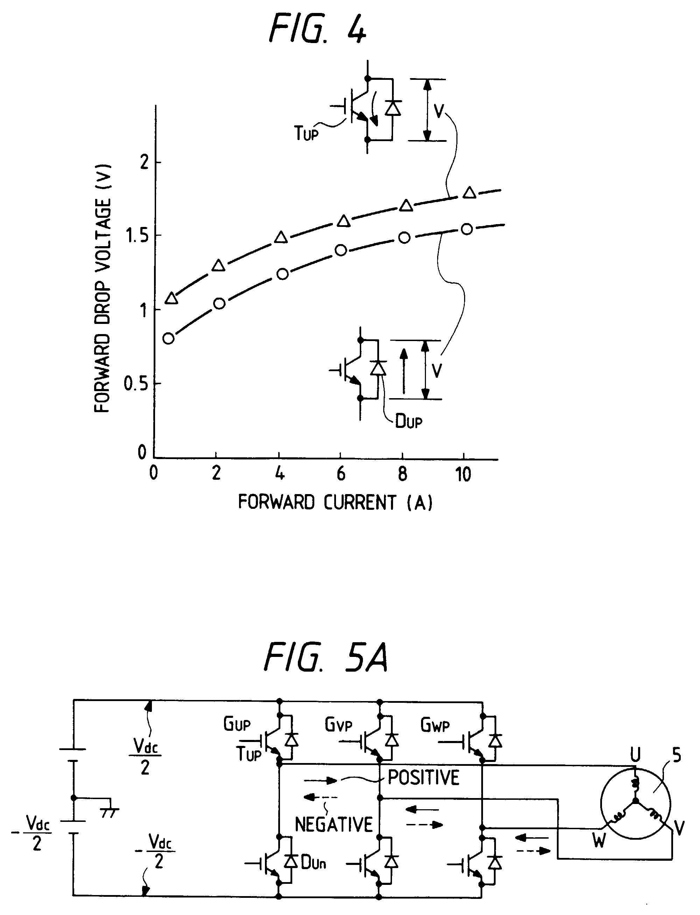

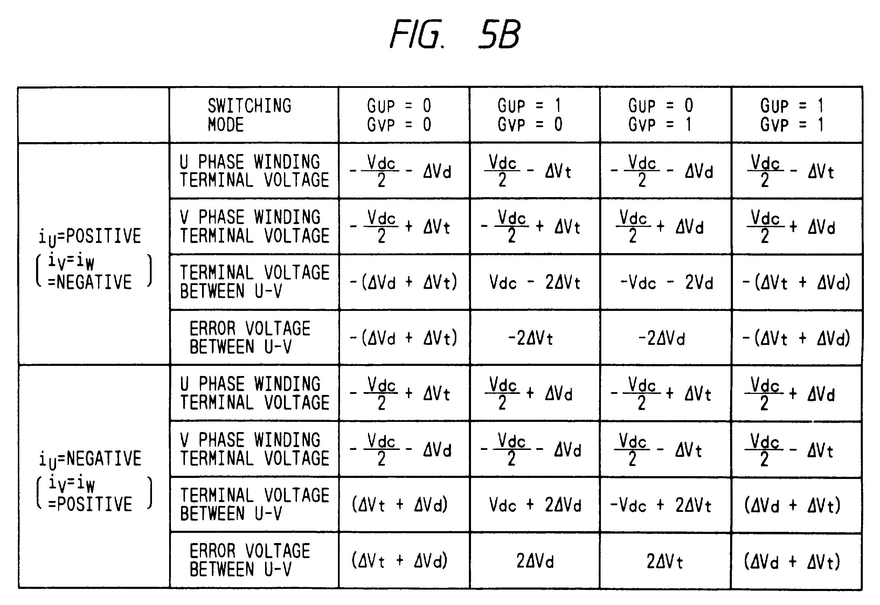

FIG.4 shows an example of forward voltage drop characteristics versus forward currents for a transistor Tup and a reflux diode Dup composing the power element. FIG.5 is a figure explaining the inverter output voltage drop due to the ON-state voltage drop. The voltage in the positive arm terminal is +Vdc/2 and in the negative arm terminal is -Vdc/2, providing the inverter input voltage as Vdc. Therein, since the V-phase and the W-phase have the identical signals, there are four kinds of combinations of the switching modes as described in FIGS. 5A and 5B. When iu is positive and Gup = 0, the current iu flows through the diode Dun. And when Gup = 1, iu flows through the transistor Tup. Therein, approximating that the voltage drop in the diode ΔVd nearly equals to the voltage drop in the transistor ΔVt, as described in FIG.4, the error voltage in the actual voltage of the motor winding terminal for the U-phase against the magnitude of the voltage command is approximately -( ΔVd + ΔVt )/2. On the contrary, when iu is negative, the error voltage in the actual voltage of the motor winding terminal for the U-phase against the magnitude of the voltage command is approximately +( ΔVd + ΔVt ). In the ON-state voltage calculating operation 23 in FIG.2, Von = ( ΔVd + ΔVt )/2 is obtained from a function table or an approximation equation corresponding to the magnitude of iu based on the characteristic described in FIG.4. The magnitude of the pulse width correction corresponding to Von is obtained from the following equation.$\text{Tb = Tc•Von/Vdc}$ where Tc is the carrier wave cycle from a carrier wave command 17.

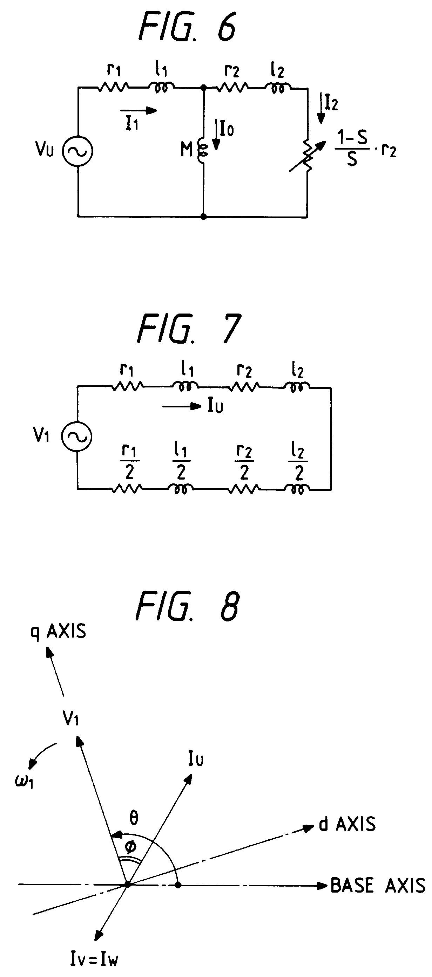

Referring now to FIG.6, FIG.7 and FIG.8, the calculating operation for active power component of current Iq and reactive power component of current Id 11 and the calculating operation for primary and secondary combined resistance and combined leakage inductance 12 will be described below in detail. FIG.6 shows an equivalent circuit for the portion of one phase of the induction motor. When the slip s=1 where the impedance induced by the secondary resistance r₂ and the secondary leakage inductance l₂ is small, the mutual inductance M may be approximated as an open state. Since the motor windings of the V-phase and the W-phase are connected in parallel and receive the identical signal, the equivalent circuit between the U-VW becomes as described in FIG.7. The inverter output voltage V₁ ( alternating excitation voltage ) is applied thereto. Therein,
( r₁ + r₂ ) is the value of the active power Pq divided by the square of the root-mean-square value of the current in the U-phase of the motor ( Iu² ) and given by the following equation.${\text{( r}}_{\text{1}} {\text{+ r}}_{\text{2}} {\text{) = V}}_{\text{1}} {\text{•Iu•cosφ/(1.5•Iu}}^{\text{2}} \text{)}$ where, φ is the power factor angle described in FIG.8. The combined leakage inductance ( l₁ + l₂ ) is the value of the reactive power Pd divided by the square of the root-mean-square value of the current in the U-phase of the motor ( Iu² ) and given by the following equation.${\text{( l}}_{\text{1}} {\text{+ l}}_{\text{2}} {\text{) = V}}_{\text{1}} {\text{•Iu•sinφ/(1.5ω}}_{\text{1}} {\text{•Iu}}^{\text{2}} \text{)}$

The active power Pq = V₁•Iu•cosφ is the average value of the integration of the product of the instantaneous alternating current excitation voltage v₁ and the instantaneous current in the U-phase iu over the interval of the one cycle of the primary frequency. Therein, though the iu is of a distorted wave shape due to single phase excitation, the v₁ with dead time correction is a nearly sine wave voltage and is composed of the only one component of the fundamental wave. Therefore, the instantaneous power v₁•iu is composed of the only one component of the fundamental wave. The active power component of current
Iq = Iu•cosφ is the average value of the integration of 1.414•sinθ •iu over the interval of one cycle of the primary frequency, since v₁ = 1.414•V₁•sinθ. Concretely explaining,
the Iq is obtained by sampling and accumulating 1.414•sinθ •iu
with an arbitrary sampling frequency within the interval of the primary frequency and by dividing the accumulated value by the number of the accumulation.

On the other hand, the reactive power Pd=V₁•Iu•sinφ is the average value of the integration of the product of the instantaneous voltage -1.414•V₁•cosθ, which is 90° delay of the instantaneous alternating current excitation voltage v₁, and the instantaneous U-phase current iu. Therefore, the reactive power component of current Id is the average value of the integration of - 1.414•cosθ •iu over the interval of one cycle of the primary frequency. Concretely explaining, the Id is obtained by sampling and accumulating -1.414•cosθ•iu with an arbitrary sampling frequency within the interval of one cycle of the primary frequency and by dividing the accumulated value by the number of the accumulation.

Referring to FIG.8, the d-axis component of Iu is Id, and the q-axis component of Iu is Iq, then Iu² = ( Id² + Iq² ) and the equations 3 and 4 can be written as follows;${\text{( r}}_{\text{1}} {\text{+ r}}_{\text{2}} {\text{) = V}}_{\text{1c}} {\text{•Iq/1.5( Id}}^{\text{2}} {\text{+ Iq}}^{\text{2}} \text{)}$${\text{( l}}_{\text{1}} {\text{+ l}}_{\text{2}} {\text{) = V}}_{\text{1c}} {\text{•Id/1.5( Id}}^{\text{2}} {\text{+ Iq}}^{\text{2}} {\text{)ω}}_{\text{1}}$

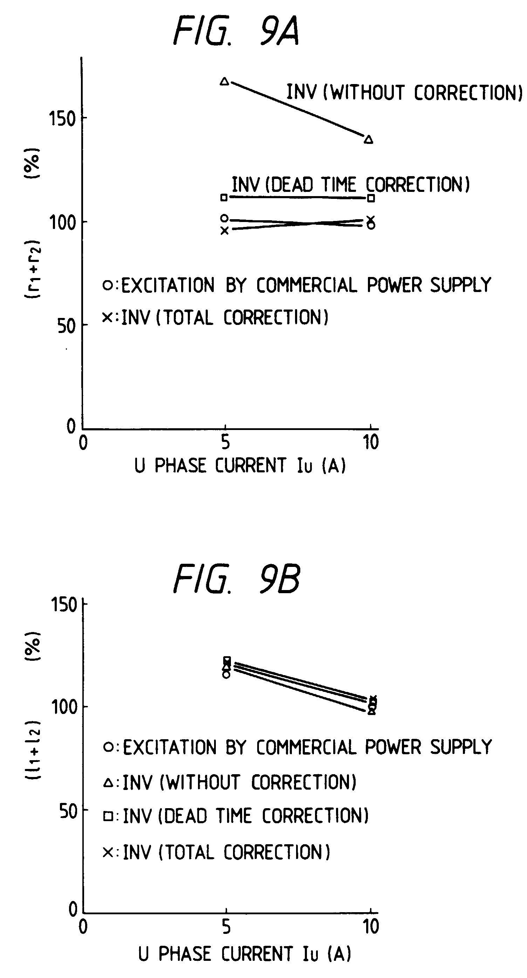

Fig.9 shows some experimental results on a characteristic measurement by using the method according to the present invention. The characteristic has been obtained from a 2.2 kW induction motor using a 50 A rated IGBT inverter. By correcting the pulse width by the magnitude of the inverter output voltage errors due to the dead time and due to the ON-state voltage drop in the power elements corresponding to the motor current polarity, the magnitude of the actual inverter output voltage V₁ ( voltage between the U-VW terminals of the motor ) is approximately equal to the magnitude of the alternating current excitation voltage command V_{1c}. In consequence, the combined leakage inductance ( l₁ + l₂ ) and the combined resistance ( r₁ + r₂ ) are capable of calculational measuring without using any inverter output voltage detector with the same level of high accuracy as in the measurement using the commercial electric power excitation. Further, there is another effect capable of measuring by use of a low calculating speed and low cost single chip microprocessor in a short time, where the active power component of current Iq and the reactive power component of current Id are calculated by means of accumulating operation over the interval of one cycle of the primary frequency from the detected instantaneous current of the motor iu and the phase of alternating current excitation voltage vector θ.

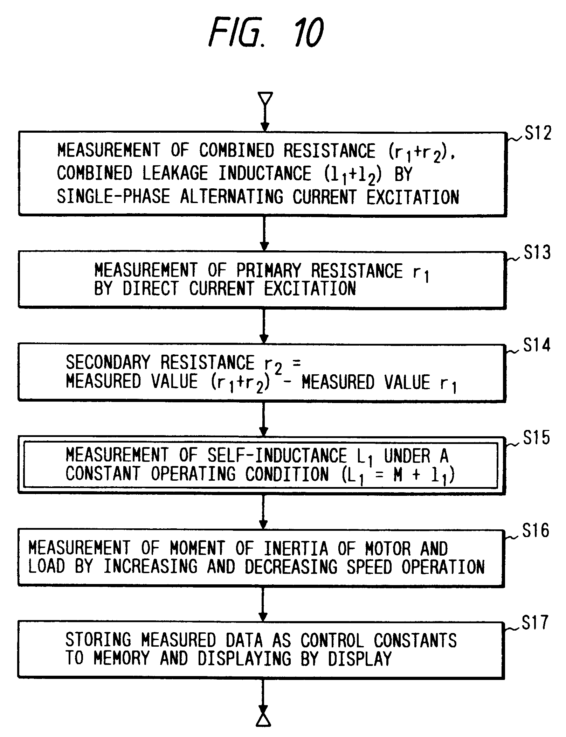

Next, FIG.10 shows a detailed contents how to obtain the characteristic constants r₁, r₂, L₁ . Firstly, by the single phase alternating current excitation method described as above, a combined resistance ( r₁ + r₂ ) and a combined leakage inductance ( l₁ + l₂ ) are measured as shown in step S12. Then, by the direct current excitation method, the primary resistance r₁ is measured as shown in step S13. The measured value r₂ is obtained by subtracting the measured value r₁ from the measured value ( r₁ + r₂ ) as shown in step S14. In addition to this, when the ( r₁ + r₂ ) and the r₂ are measured at a room temperature, these values are needed to increase by 10% to 15% in account of temperature increase in the normal operation.

Next, the self-inductance L₁ ( L₁ = M + l₁ ) is measured under the normal operating condition, that is, in a constant speed and a constant frequency of the motor, as shown in step S15. By the operation of increasing and decreasing speed of the motor, the moment of inertia of the motor and load is measured as shown in step S16. After that, these data are stored in the non-volatile memory and displayed with the display as shown in step S17 and is used so as to control the motor in high accuracy in the next.

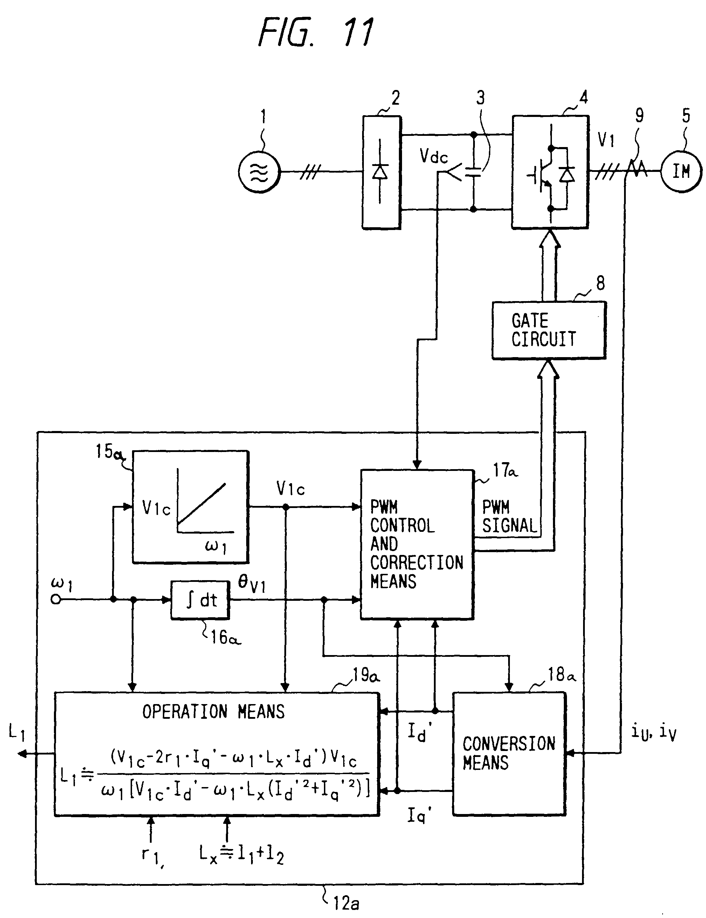

Furthermore, a method on measuring a self-inductance L₁ will be described below. A block diagram in FIG. 11 having a L₁ calculating means 12a shows a detail construction operated by a measuring method of the self-inductance L₁ as shown in FIG. 10. A V/f-constant operation means 15a outputs a primary voltage command V_{1c} proportional to a primary angular frequency command ω₁. An integrating operation means 16a produces a phase command θᵥ₁ for primary voltage vector by integrating ω₁. A PWM control and correction means 17a outputs a pulse width modulation signal corresponding to the magnitude of the primary voltage command V_{1c} and the phase command θᵥ₁ for the primary voltage vector, and carries out the normal operation near the rated frequency and near the rated magnetic flux ( ratio of rated frequency and rated voltage ). In the PWM control and correction means 17a, the pulse width is corrected depending on the fluctuation of the direct current voltage V_{dc} such that the magnitude of the actual inverter output voltage V₁ may agree with the primary voltage command V_{1c}. Further, the voltage error caused by the dead time which is provided to prevent short circuit between the positive and negative arms of the inverter is also corrected corresponding to the polarity of current of the motor. Next, a general three-phase alternating current / two-phase direct current conversion means 18a carries out the calculations of the equations 7 and 8, and obtains a reactive power component of current Id' and an active power component of current Iq'. Therein, θd = θᵥ₁ - π/2.$\text{Id' = iu•sinθd/1.414-(iu+2 iv)cosθd/2.45}$$\text{Iq' = iu•cosθd/1.414+(iu+2 iv)sinθd/2.45}$

Then, a self-inductance calculating operation means 19a calculates L₁ by using the equation 9 based on the values Id' and Iq', the primary angular frequency command ω₁, the primary voltage command V_{1c}, and the primary resistance r₁ and the combined leakage inductance Lx ( Lx ≒ l₁ + l₂ ) which have previously been measured.${\text{L}}_{\text{1}} \text{=} \frac{\text{(} \text{V} {\text{}}_{{\text{1}}_{\text{c}}} \text{-2} {\text{r}}_{\text{1}} \text{·} \text{Iq'} {\text{-ω}}_{\text{1}} \text{·} \text{Lx} \text{·} \text{Id'} \text{)} \text{V} {\text{}}_{{\text{1}}_{\text{c}}} \text{+} {\text{r}}_{\text{1}}^{\text{2}} \text{(} {\left[\text{Id} \text{'}\right]}^{\text{2}} \text{+} {\left[\text{Iq'}\right]}^{\text{2}} \text{)}}{{\text{ω}}_{\text{1}} \left[\text{V} {\text{}}_{{\text{1}}_{\text{c}}} \text{·} \text{Id'} {\text{-ω}}_{\text{1}} \text{·} \text{Lx} \text{(} {\left[\text{Id'}\right]}^{\text{2}} \text{+} {\left[\text{Iq'}\right]}^{\text{2}} \text{)}\right]} \text{≒} \frac{\text{(} \text{V} {\text{}}_{{\text{1}}_{\text{c}}} \text{-2} {\text{r}}_{\text{1}} \text{·} \text{Iq'} {\text{-ω}}_{\text{1}} \text{·} \text{Lx} \text{·} \text{Id'} \text{)} \text{V} {\text{}}_{{\text{1}}_{\text{c}}}}{{\text{ω}}_{\text{1}} \left[\text{V} {\text{}}_{{\text{1}}_{\text{c}}} \text{·} \text{Id'} {\text{-ω}}_{\text{1}} \text{·} \text{Lx} \text{(} {\left[\text{Id'}\right]}^{\text{2}} \text{+} {\left[\text{Iq'}\right]}^{\text{2}} \text{)}\right]}$

Therein, the magnitude of the actual inverter output voltage V₁ may be detected with a voltage sensor and used instead of the primary voltage command V_{1c}.

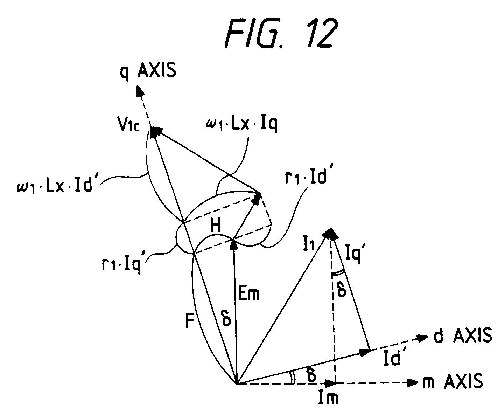

Referring to a voltage-current vector diagram FIG.12, the derivation of equation 9 will be described below. Providing q-axis is a direction of the primary voltage vector and d-axis is a direction of π/2 delayed from the q-axis, the q-axis component of the primary current vector I₁ is the active power component of current Iq' and the d-component thereof is the reactive power component of current Id'. On the other hand, the component of the secondary inter-linkage magnetic flux direction, which is π/2 delayed from the induced voltage vector Eₘ, of the primary current vector is the excitation component of the current Iₘ. Therefore, the induced voltage Eₘ is generally given by equation 10, where M is the mutual inductance and L₂(= M+l₂) is the secondary self-inductance.${\text{E}}_{\text{m}} {\text{= ω}}_{\text{1}} {\text{M}}^{\text{2}} {\text{•I}}_{\text{m}} {\text{/L}}_{\text{2}}$

The relation Iₘ = (Id"cosδ-Iq'•sinδ) is obtained from FIG.12, then equation 10 becomes equation 11.${\text{E}}_{\text{m}} {\text{=ω}}_{\text{1}} {\text{M}}^{\text{2}} {\text{(Id'•cosδ-Iq'•sinδ)/L}}_{\text{2}}$

Further, providing H is the d-axis component of Eₘ and F is the q-axis component of Eₘ as referred to Fig.12, Eₘ becomes equation 12 and equation 13 is obtained because
the equation 11 = the equation 12.${\text{E}}_{\text{m}} \text{= F•cosδ+H•sinδ}$${\text{F•cosδ+H•sinδ = ω}}_{\text{1}} {\text{M}}^{\text{2}} {\text{(Id'•cosδ-Iq'•sinδ)/L}}_{\text{2}}$

Dividing both side of the equation 13 by cosδ, substituting tanδ = H/F and arranging, equation 14 is obtained.${\text{F}}^{\text{2}} {\text{+H}}^{\text{2}} {\text{= ω}}_{\text{1}} {\text{M}}^{\text{2}} {\text{(Id'•F-Iq'•H)/L}}_{\text{2}}$

Since the self-inductance L₁ = Lx+M²/L₂, by obtaining M²/L₂ from the equation 12 to substitute this equation, L₁ becomes equation 15.${\text{L}}_{\text{1}} {\text{= [F}}^{\text{2}} {\text{+H}}^{\text{2}} {\text{+ω}}_{\text{1}} {\text{Lx(Id'•F-Iq'•H)]/[ω}}_{\text{1}} \text{(Id'•F-Iq'•H)]}$

Referring to FIG. 12, F = V_{1c}-ω₁Lx•Id'-r₁•Iq' and H = ω₁Lx•Iq'-r₁•Id', by substituting these relations into the equation 15 and arranging, then L₁ becomes the equation 9. Therein, there is an advantage in that L₁ can be measured even at a load operation without any inverter output voltage sensor by means of using the equation 9 in the calculation though Id' and Iq' change as the load changes.

Further, Id' and Iq' are accurately calculated because of the pulse width modulation signal being output based on a phase θᵥ₁ obtained by integrating the primary angular frequency command θ₁, the Iq', component in the primary voltage vector direction of the motor current vector I₁, and the Id', component in the 90° delayed direction thereof of the motor current vector, being directly obtained which are not affected by the errors in the internal impedance of the motor. As a result, there is an advantage in that L₁ can accurately measured since L₁ is calculated based on the accurate values of Id' and Iq'.

According to the present invention, there is an effect capable of calculatingly measuring the combined leakage inductance ( l₁ + l₂ ) and the combined resistance ( r₁ + r₂ )
with high accuracy only from the magnitude of the excitation voltage command and the detected instantaneous current of the motor with correcting the inverter output voltage error due to the dead time and the ON-state voltage drop in power elements without using any inverter output voltage sensor. Further, there is another effect capable of measuring by use of a low calculating speed and low cost single-chip microprocessor in a short time, where the active power component of current and the reactive power component of current are calculable in the interval of one cycle of the primary frequency from the phase of the excitation voltage vector command θ and the detected instantaneous current in the motor iu.

Further on measuring a self inductance, the active power component of current Iq' and the reactive power component of current Id' can accurately be obtained without relation to the load by means of outputting an inverter output voltage based on the phase of the primary voltage vector and separating the primary current vector with the component in the primary voltage vector direction based on the phase above. The self-inductance L₁ can accurately be measured without any inverter output voltage sensor and without relation to the magnitude of load since L₁ is calculated based on the Iq' and Id' above and the primary voltage command V_{1c} and so on.

## Claims

1. A method for measuring characteristic constants of an alternating current motor (5) controlled by an inverter apparatus comprising an inverter (4) for inverting direct current voltage into alternating current so as to supply the alternating current to said motor (5) and a controller (6) for controlling a magnitude and a pulse-width of an output voltage of said inverter (4),
**characterized** by
producing single-phase alternating current excitation signals (S_{UP}, S_{UN}, S_{VP}, S_{Vn}, S_{WP}, S_{Wn}) based on a primary frequency command value ω1 and a primary voltage command value V_{1c} of said inverter, and a detected current value of the motor (5), said single-phase alternating current excitation signals being obtained by supplying pulse width signals (Sup, Sun) of a sine wave to only one phase out of three phases of the motor (5) and the pulse width signals (S_{VP}, Sᵥₙ, S_{WP}, S_{wn}) of conduction rate 1/2 to the other two phases of the motor,
controlling the motor (5) based on said single-phase alternating current excitation signals (S_{Un},... S_{Wn}),
calculating an active power component of current Iq and a reactive power component of current Id for the motor (5) based on the phase obtained by integrating said primary frequency command ω1 and a detected current value of the motor (5) controlled in the manner of the single-phase alternating current excitation, and
measuring a primary and secondary combined resistance r₁ + r₂ of the motor (5) based on the ratio of an equation V_{1c} · Iq and an equation Id² + Iq² and a primary and secondary combined leakage inductance l₁ + l₂ of the motor (5) based on the ratio of an equation V_{1c} · Id and an equation ω1 (Id² + Iq²).

2. The method of claim 1,
characterized by
correcting the pulse width signals according to pulse width (T_{λ}) depending on the current polarity of the motor (5), said pulse width (T_{λ}) corresponding to an inverter output voltage error due to a dead time being provided to prevent short-circuit between positive and negative arms of the inverter (4) and an ON-state voltage drop in power semiconductor elements.

3. The method of claim 1,
characterized by
obtaining said active power component Iq from an averaged value of an integration of the equation sinθ·iu over an interval of an integer number times of one-half cycle interval of the primary frequency and obtaining said reactive power component Id from the averaged value of the integration of the equation -cosθ·iu over the interval of an integer number times of one half cycle of the primary frequency, and
providing the angle (θ) as rotational phase of the alternating current excitation voltage vector obtained by integrating the primary frequency command ω1 and the iu defined as a detected instantaneous current in the phase performed sine wave modulation.

4. The method of claim 1,
characterized in that
the combined resistance r₁ + r₂ and the combined leakage inductance l₁ + l₂ are calculated based on the equations${\text{r}}_{\text{1}} {\text{+ r}}_{\text{2}} {\text{= V}}_{\text{1c}} {\text{· Iq/[1.5 · (Id}}^{\text{2}} {\text{+ Iq}}^{\text{2}} \text{)]} {\text{l}}_{\text{1}} {\text{+ l}}_{\text{2}} {\text{= V}}_{\text{1c}} {\text{· Id/[1.5 · (Id}}^{\text{2}} {\text{+ Iq}}^{\text{2}} \text{) · ω1].}$

5. A method for measuring the primary self-inductance (L₁) of an alternating current motor,
characterized by
controlling an inverter based on a primary frequency command value ω1 and a primary voltage command value V_{1c} so as to operate said alternating current motor (5) at a constant speed,
calculating thereat an active power component Iq' defined by a primary voltage vector component of a current vector (I₁) of the motor (5) and a reactive power component Id' defined by a voltage vector component delayed 90 degrees from the primary voltage vector component of said current vector (I₁) of the motor by using a phase obtained by integrating said primary frequency command value ω1 and a detected current of the motor, and
calculating the primary self-inductance L₁ by using a primary resistance r₁ and a primary and secondary combined leakage inductance (Lₓ = l₁ + l₂) of the motor (5) which is previously measured according to the method of Claim 1 based on one of the following equations:${\text{L}}_{\text{1}} \text{=} \frac{{\text{(V}}_{\text{1c}} {\text{-2r}}_{\text{1}} {\text{·Iq'-ω1·L}}_{\text{x}} {\text{·I}}_{\text{d}} {\text{')V}}_{\text{1c}} {\text{+ r}}_{\text{1}} {}^{\text{2}} \text{(} {\left[\text{I} {\text{}}_{\text{d}} \text{'}\right]}^{\text{2}} \text{+} {\left[\text{I} {\text{}}_{\text{q}} \text{'}\right]}^{\text{2}} \text{)}}{{\text{ω1 [V}}_{\text{1c}} {\text{· I}}_{\text{d}} {\text{' - ω1 · L}}_{\text{x}} \text{(} {\left[\text{I} {\text{}}_{\text{d}} \text{'}\right]}^{\text{2}} \text{+} {\left[\text{I} {\text{}}_{\text{q}} \text{'}\right]}^{\text{2}} \text{)}} \text{≒} \frac{{\text{(V}}_{\text{1c}} {\text{- 2r}}_{\text{1}} {\text{· Iq' - ω1 · L}}_{\text{x}} {\text{· I}}_{\text{d}} {\text{') V}}_{\text{1c}}}{{\text{ω1 [V}}_{\text{1c}} {\text{· I}}_{\text{d}} {\text{' - ω1 · L}}_{\text{x}} \text{(} {\left[\text{I} {\text{}}_{\text{d}} \text{'}\right]}^{\text{2}} \text{+} {\left[\text{I} {\text{}}_{\text{q}} \text{'}\right]}^{\text{2}} \text{)}} \text{.}$

6. A controller for controlling an alternating current motor (5) by an inverter apparatus comprising an inverter (4) for converting direct current voltage into alternating current so as to supply the alternating current to said motor (5) and a controller (7) for controlling the magnitude and the pulse-width of the output voltage of said inverter (4),
characterized by further comprising
means for producing single-phase alternating current excitation signals (S_{UP}, S_{UN}, S_{VP}, S_{Vn}, S_{WP}, S_{wn}) based on a primary frequency command value ω1 and a primary voltage command value V_{1c} of said inverter (4), and a detected current value of the motor,
means for controlling the motor (5) in a manner of single-phase alternating current excitation based on said single-phase alternating current excitation signals (S_{Un}, ... S_{Wn}) by supplying pulse width signals (Sup, Sun) of a sine wave to only one phase out of three phases of the motor (5) and the pulse width signals (S_{VP}, Sᵥₙ, S_{WP}, S_{wn}) of conduction rate 1/2 to the other two phases of the motor,
means for calculating an active power component of current Iq and a reactive power component of current Id for the motor (5) based on the phase obtained by integrating said primary frequency command ω1 and a detected current value of the motor (5) controlled in the manner of the single-phase alternating current excitation, and
means for measuring a primary and secondary combined resistance r₁ + r₂ of the motor based on the ratio of an equation V_{1c} · Iq and an equation Id² + Iq², and a primary and secondary combined leakage inductance l₁ + l₂ of the motor based on the ratio of an equation V_{1c} · Id and an equation ω1(Id² + Iq²).

7. The controller of claim 6,
characterized in comprising
means (26) for correcting the pulse width signals according to a pulse width (Tλ) depending on the current polarity of the motor (5), said pulse width (Tλ) corresponding to an inverter output voltage error due to a dead time being provided to prevent short-circuit between positive and negative arms of the inverter (4) and an ON-state voltage drop in power semiconductor elements.

8. The controller of claim 6,
characterized in further comprising
means for calculating the combined resistance r₁ + r₂ and the combined leakage inductance l₁ + l₂ based on the equations${\text{r}}_{\text{1}} {\text{+ r}}_{\text{2}} {\text{= V}}_{\text{1c}} {\text{· Iq/[1.5 · (Id}}^{\text{2}} {\text{+ Iq}}^{\text{2}} \text{)]} {\text{l}}_{\text{1}} {\text{+ l}}_{\text{2}} {\text{= V}}_{\text{1c}} {\text{· Id/[1.5 · (Id}}^{\text{2}} {\text{+ Iq}}^{\text{2}} \text{) · ω1].}$

9. A controller for controlling an alternating current motor (5) comprising
means for determining the primary self-inductance (L₁) of the alternating current motor (5),
characterized in comprising
means for controlling an inverter (4) based on a primary frequency command value ω1 and a primary voltage command value V_{1c} so as to operate said alternating current motor (5) at a constant speed,
means for calculating thereat an active power component Iq' defined by a primary voltage vector component of a current vector (I₁) of the motor (5) and a reactive power component Id' defined by a voltage vector component delayed 90 degrees from the primary voltage vector component of said current vector (I₁) of the motor (5) by using a phase obtained by integrating said primary frequency command value ω1 and a detected current of the motor (5), and
means for calculating the primary self-inductance L₁ by using a primary resistance r₁ and a primary and secondary combined leakage inductance Lₓ = l₁ + l₂ of the motor (5) which is previously measured according to the method of Claim 1 of based on one of the following equations,${\text{L}}_{\text{1}} \text{=} \frac{{\text{(V}}_{\text{1c}} {\text{-2r}}_{\text{1}} {\text{·Iq'-ω1·L}}_{\text{x}} {\text{·I}}_{\text{d}} {\text{')V}}_{\text{1c}} {\text{+ r}}_{\text{1}} {}^{\text{2}} \text{(} {\left[\text{I} {\text{}}_{\text{d}} \text{'}\right]}^{\text{2}} \text{+} {\left[\text{I} {\text{}}_{\text{q}} \text{'}\right]}^{\text{2}} \text{)}}{{\text{ω1 [V}}_{\text{1c}} {\text{· I}}_{\text{d}} {\text{' - ω1 · L}}_{\text{x}} \text{(} {\left[\text{I} {\text{}}_{\text{d}} \text{'}\right]}^{\text{2}} \text{+} {\left[\text{I} {\text{}}_{\text{q}} \text{'}\right]}^{\text{2}} \text{)}} \text{≒} \frac{{\text{(V}}_{\text{1c}} {\text{- 2r}}_{\text{1}} {\text{· Iq' - ω1 · L}}_{\text{x}} {\text{· I}}_{\text{d}} {\text{') V}}_{\text{1c}}}{{\text{ω1 [V}}_{\text{1c}} {\text{· I}}_{\text{d}} {\text{' - ω1 · L}}_{\text{x}} \text{(} {\left[\text{I} {\text{}}_{\text{d}} \text{'}\right]}^{\text{2}} \text{+} {\left[\text{I} {\text{}}_{\text{q}} \text{'}\right]}^{\text{2}} \text{)}} \text{.}$

## Patentansprüche

1. Verfahren zum Messen charakteristischer Konstanten eines Wechselstrommotors (5), der von einer Wechselrichtereinrichtung gesteuert wird, die zum Umwandeln von Gleichstrom in Wechselstrom und zum Anlegen des Wechselstroms an den Motor (5) einen Wechselrichter (4) und zum Steuern der Größe und der Pulsdauer einer Ausgangsspannung des Wechselrichters (4) eine Steuereinheit (6) enthält,
gekennzeichnet durch
Erzeugung von Signalen zur Erregung eines Einphasen-Wechselstroms (S_{UP} , S_{UN}, S_{VP} , Sᵥₙ , S_{WP} , S_{Wn} ) auf der Basis eines Primärfrequenzbefehlswertes ω1 und eines Primärspannungsbefehlswertes V_{1c} des Wechselrichters und eines erfaßten Stromwertes des Motors (5), wobei die Signale zur Erregung des Einphasen-Wechselstroms durch Anlegen von sinuswellenförmigen Signalen der Pulsdauer (Sup, Sun) an nur eine Phase der drei Phasen des Motors (5) und von Signalen der Pulsdauer (S_{VP} , Sᵥₙ , S_{WP} , S_{wn} ) mit einer halben Stromflußrate an die anderen zwei Phasen des Motors erhalten werden,
Steuerung des Motors (5) auf der Basis der Signale zur Erregung eines Einphasen-Wechselstroms (S_{UN}, ... S_{Wn} ),
Berechnung einer Wirkleistungskomponente des Stroms Iq und einer Blindleistungskomponente des Stroms Id für den Motor (5) auf der Basis der Phase, die durch Integration des Primärfrequenzbefehls ω1 und eines erfaßten Stromwertes des Motors (5) erhalten wurde, der in Form der Einphasen-Wechselstromerregung gesteuert wird,
und
Messung eines primären und sekundären kombinierten Widerstands r₁ + r₂ des Motors (5) auf der Basis des Verhältnisses zwischen einer Gleichung V_{1c} • Iq und einer Gleichung Id² + Iq² und einer primären und sekundären kombinierten Streuinduktivität I₁ + I₂ des Motors (5) auf der Basis des Verhältnisses zwischen einer Gleichung V_{1c} • Id und einer Gleichung ω1 (Id² + Iq² ).

2. Verfahren nach Anspruch 1,
gekennzeichnet durch
Korrektur der Pulsdauersignale gemäß einer Pulsdauer (Tλ) in Abhängigkeit von der Strompolarität des Motors (5), wobei die Pulsdauer (Tλ), die infolge einer Totzeit, die angegeben ist, um einen Kurzschluß zwischen den positiven und negativen Armen des Wechselrichters (4) zu verhindern, einer Fehlerspannung am Wechselrichterausgang entspricht, und einem Spannungsabfall im Ein-Zustand (ON) in den Halbleiter-Leistungsgliedern.

3. Verfahren nach Anspruch 1,
gekennzeichnet durch
Erhalten der Wirkleistungskomponente Iq aus einem Mittelwert einer Integration der Gleichung sinθ • iu über eine ganzzahlige Anzahl eines halben Zyklusintervalls der Primärfrequenz und
Erhalten der Blindleistungskomponente Id aus dem Mittelwert der Integration der Gleichung -cosθ • iu über eine ganzzahlige Anzahl eines halben Zyklusintervalls der Primärfrequenz und
Angeben des Winkels (θ) als Drehphase des Vektors der Wechselstromerregerspannung, der durch Integration des Primärfrequenzbefehlswertes ω1 erhalten wurde, und des Wertes iu , der als erfaßter Augenblicksstrom in der Phase vorgegeben ist, die einer Sinuswellenmodulation unterzogen wurde.

4. Verfahren nach Anspruch 1,
dadurch gekennzeichnet, daß
der kombinierte Widerstand r₁ + r₂ und die kombinierte Streuinduktivität (I₁ + I₂ ) auf der Basis der Gleichungen${\text{r}}_{\text{1}} {\text{+ r}}_{\text{2}} {\text{= V}}_{\text{1c}} {\text{• Iq/[1,5 x (Id}}^{\text{2}} {\text{+ Iq}}^{\text{2}} \text{)]}$${\text{l}}_{\text{1}} {\text{+ l}}_{\text{2}} {\text{= V}}_{\text{1c}} {\text{• Id/[1,5 x (Id}}^{\text{2}} {\text{+ Iq}}^{\text{2}} \text{) • ω1]}$ berechnet werden.

5. Verfahren zum Messen der primären Selbstinduktivität (L,) eines Wechselstrommotors,
gekennzeichnet durch
Steuerung eines Wechselrichters auf der Basis eines Primärfrequenzbefehlswertes ω1 und eines Primärspannungsbefehlswertes V_{1c} , um den Wechselstrommotor (5) mit einer konstanten Geschwindigkeit zu betreiben, Berechnung einer Wirkleistungskomponente Iq', die durch eine Primärspannungsvektorkomponente eines Stromvektors (I₁) des Motors (5) vorgegeben ist, und einer Blindleistungskomponente Id', die durch eine Spannungsvektorkomponente vorgegeben ist, die um 90° gegenüber der Primärspannungsvektorkomponente des Stromvektors (I₁ ) des Motors verzögert ist, indem eine Phase verwendet wird, die durch Integration des Primärfrequenzbefehlswertes ω1 und eines erfaßten Stroms des Motors erhalten wird, und
Berechnung der primären Selbstinduktivität L, unter Verwendung eines primären Widerstandes r₁ und einer primären und sekundären kombinierten Streuinduktivität (Lₓ = I₁ + I₂ ) des Motors (5), die vorher gemäß dem Verfahren von Anspruch 1 gemessen wurden, auf der Basis einer der folgenden Gleichungen:${\text{L}}_{\text{1}} \text{=} \frac{{\text{(V}}_{\text{1c}} {\text{-2r}}_{\text{1}} {\text{·Iq'-ω1·L}}_{\text{x}} {\text{·I}}_{\text{d}} {\text{')V}}_{\text{1c}} {\text{+ r}}_{\text{1}} {}^{\text{2}} \text{(} {\left[\text{I} {\text{}}_{\text{d}} \text{'}\right]}^{\text{2}} \text{+} {\left[\text{I} {\text{}}_{\text{q}} \text{'}\right]}^{\text{2}} \text{)}}{{\text{ω1 [V}}_{\text{1c}} {\text{· I}}_{\text{d}} {\text{' - ω1 · L}}_{\text{x}} \text{(} {\left[\text{I} {\text{}}_{\text{d}} \text{'}\right]}^{\text{2}} \text{+} {\left[\text{I} {\text{}}_{\text{q}} \text{'}\right]}^{\text{2}} \text{)}} \text{≒} \frac{{\text{(V}}_{\text{1c}} {\text{- 2r}}_{\text{1}} {\text{· Iq' - ω1 · L}}_{\text{x}} {\text{· I}}_{\text{d}} {\text{') V}}_{\text{1c}}}{{\text{ω1 [V}}_{\text{1c}} {\text{· I}}_{\text{d}} {\text{' - ω1 · L}}_{\text{x}} \text{(} {\left[\text{I} {\text{}}_{\text{d}} \text{'}\right]}^{\text{2}} \text{+} {\left[\text{I} {\text{}}_{\text{q}} \text{'}\right]}^{\text{2}} \text{)}} \text{.}$

6. Steuereinheit zum Steuern eines Wechselstrommotors (5) durch eine Wechselrichtereinrichtung, die einen Wechselrichter (4) zum Umwandeln von Gleichstrom in Wechselstrom, um den Wechselstrom an den Motor (5) anzulegen, und eine Steuereinheit (7) zum Steuern der Größe und der Pulsdauer der Ausgangsspannung des Wechselrichters (4) umfaßt,
gekennzeichnet dadurch, daß sie weiter umfaßt:
eine Einrichtung zur Erzeugung von Signalen zur Erregung eines Einphasen-Wechselstroms (S_{UP}, S_{UN}, S_{VP} , Sᵥₙ , S_{WP} , S_{Wn} ) auf der Basis eines Primärfrequenzbefehlswertes ω1 und eines Primärspannungsbefehlswertes V_{1c} des Wechselrichters (4) und eines erfaßten Stromwertes des Motors (5),
eine Einrichtung zur Steuerung des Motors (5) in Form einer Einphasen-Wechselstromerregung auf der Basis von Signalen zur Erregung des Einphasen-Wechselstroms (S_{UN},... S_{Wn} ) durch Anlegen von sinuswellenförmigen Signalen der Pulsdauer (Sup, Sun) an nur eine Phase der drei Phasen des Motors (5) und von Signalen der Pulsdauer (S_{VP} , Sᵥₙ , S_{WP} , S_{wn} ) mit einer halben Stromflußrate an die anderen zwei Phasen des Motors,
eine Einrichtung zur Berechnung einer Wirkleistungskomponente des Stroms Iq und einer Blindleistungskomponente des Stroms Id für den Motor (5) auf der Basis der Phase, die durch Integration des Primärfrequenzbefehls ω1 und eines erfaßten Stromwertes des Motors (5) erhalten wurde, der in Form der Einphasen-Wechselstromerregung gesteuert wird,
und
eine Einrichtung zur Messung eines primären und sekundären kombinierten Widerstands r₁ + r₂ des Motors (5) auf der Basis des Verhältnisses zwischen einer Gleichung V_{1c} • Iq und einer Gleichung Id² + Iq² und einer primären und sekundären kombinierten Streuinduktivität I₁ + I₂ des Motors (5) auf der Basis des Verhältnisses zwischen einer Gleichung V_{1c} • Id und einer Gleichung ω1 (Id² + Iq² ).

7. Steuereinheit von Anspruch 6
dadurch gekennzeichnet, daß sie eine Einrichtung (26) zur Korrektur der Signale der Pulsdauer gemäß einer Pulsdauer (Tλ) in Abhängigkeit von der Strompolarität des Motos (5) umfaßt, wobei die Pulsdauer (Tλ), die infolge einer Totzeit, die angegeben ist, um einen Kurzschluß zwischen den positiven und negativen Armen des Wechselrichters (4) zu verhindern, einer Fehlerspannung am Wechselrichterausgang und einem Spannungsabfall im Ein-Zustand (on) in den Halbleiter-Leistungsgliedern entspricht.

8. Steuereinheit nach Anspruch 6,
dadurch gekennzeichnet, daß sie des weiteren eine Einrichtung zur Berechnung des kombinierten Widerstandes r₁ + r₂ und der kombinierten Streuinduktivität (l₁ + l₂ ) auf der Basis der Gleichungen${\text{r}}_{\text{1}} {\text{+ r}}_{\text{2}} {\text{= V}}_{\text{1c}} {\text{• Iq/[1,5 • (Id}}^{\text{2}} {\text{+ Iq}}^{\text{2}} \text{)]}$${\text{l}}_{\text{1}} {\text{+ l}}_{\text{2}} {\text{= V}}_{\text{1c}} {\text{• Id/[1,5 • (Id}}^{\text{2}} {\text{+ Iq}}^{\text{2}} \text{) • ω1]}$ umfaßt.

9. Steuereinheit zum Steuern eines Wechselstrommotors (5), die eine Einrichtung zur Bestimmung der primären Selbstinduktivität (L₁) des Wechselstrommotors (5) aufweist,
dadurch gekennzeichnet, daß sie umfaßt:
eine Einrichtung zur Steuerung eines Wechselrichters (4) auf der Basis eines Primärfrequenzbefehlswertes ω1 und eines Primärspannungsbefehlswertes V_{1c}, um den Wechselstrommotor (5) mit einer konstanten Geschwindigkeit zu betreiben,
eine Einrichtung zur Berechnung einer Wirkleistungskomponente Iq', die durch eine Primärspannungsvektorkomponente eines Stromvektors (I₁) des Motors (5) vorgegeben ist, und einer Blindleistungskomponente Id', die durch eine Spannungsvektorkomponente vorgegeben ist, die um 90° gegenüber der Primärspannungsvektorkomponente des Stromvektors (I₁) des Motors (5) verzögert ist, indem eine Phase verwendet wird, die durch Integration des Primärfrequenzbefehlswertes ω1 und eines erfaßten Stroms des Motors (5) erhalten wird,
und
eine Einrichtung zur Berechnung der primären Selbstinduktivität L, unter Verwendung eines primären Widerstandes r₁ und einer primären und sekundären kombinierten Streuinduktivität (Lₓ = l₁ + l₂ ) des Motors (5), die vorher gemäß dem Verfahren von Anspruch 1 gemessen wurden, auf der Basis einer der folgenden Gleichungen:${\text{L}}_{\text{1}} \text{=} \frac{{\text{(V}}_{\text{1c}} {\text{-2r}}_{\text{1}} {\text{·Iq'-ω1·L}}_{\text{x}} {\text{·I}}_{\text{d}} {\text{')V}}_{\text{1c}} {\text{+ r}}_{\text{1}} {}^{\text{2}} \text{(} {\left[\text{I} {\text{}}_{\text{d}} \text{'}\right]}^{\text{2}} \text{+} {\left[\text{I} {\text{}}_{\text{q}} \text{'}\right]}^{\text{2}} \text{)}}{{\text{ω1 [V}}_{\text{1c}} {\text{· I}}_{\text{d}} {\text{' - ω1 · L}}_{\text{x}} \text{(} {\left[\text{I} {\text{}}_{\text{d}} \text{'}\right]}^{\text{2}} \text{+} {\left[\text{I} {\text{}}_{\text{q}} \text{'}\right]}^{\text{2}} \text{)}} \text{≒} \frac{\left({\text{V}}_{\text{1c}} {\text{- 2r}}_{\text{1}} {\text{· Iq' - ω1 · L}}_{\text{x}} {\text{· I}}_{\text{d}} \text{'}\right) {\text{V}}_{\text{1c}}}{{\text{ω1 [V}}_{\text{1c}} {\text{· I}}_{\text{d}} {\text{' - ω1 · L}}_{\text{x}} \text{(} {\left[\text{I} {\text{}}_{\text{d}} \text{'}\right]}^{\text{2}} \text{+} {\left[\text{I} {\text{}}_{\text{q}} \text{'}\right]}^{\text{2}} \text{)}} \text{.}$

## Revendications

1. Procédé pour mesurer des constantes caractéristiques d'un moteur à courant alternatif (5) commandé par un dispositif à onduleur, comportant un onduleur (4) destiné à transformer une tension continue en un courant alternatif afin d'alimenter ledit moteur (5) avec le courant alternatif et une unité de commande (6) pour commander l'amplitude et la largeur d'impulsion de la tension de sortie dudit onduleur (4),
caractérisé en ce qu'il comporte les étapes consistant à
produire des signaux d'excitation en courant alternatif monophasé (S_{UP}, S_{Un}, S_{VP}, S_{Vn}, S_{WP}, S_{Wn}) basés sur une valeur de commande de fréquence primaire ω1 et une valeur de commande de tension primaire V_{1c} dudit onduleur, et une valeur de courant détectée du moteur (5), lesdits signaux d'excitation en courant alternatif monophasé étant obtenus en envoyant des signaux de largeur d'impulsion (S_{UP}, S_{Un}) d'une onde sinusoïdale vers uniquement une phase parmi les trois phases du moteur (5) et en envoyant les signaux de largeur d'impulsion (S_{VP}, S_{Vn}, S_{WP}, S_{Wn}) de taux de conduction 1/2 vers les deux autres phases du moteur,
commander le moteur (5) sur la base desdits signaux d'excitation en courant alternatif monophasé (S_{Un}, ..., S_{Wn}),
calculer une composante de puissance active de courant Iq et une composante de puissance réactive de courant Id pour le moteur (5) sur la base de la phase obtenue en intégrant ladite commande de fréquence primaire ω1 et une valeur de courant détectée du moteur (5) commandé conformément à l'excitation en courant alternatif monophasé, et
mesurer une résistance primaire et secondaire combinée r₁ + r₂ du moteur (5) sur la base du rapport d'une équation V_{1c} · Iq et d'une équation Id² + Iq², et une inductance de fuite primaire et secondaire combinée l₁ + l₂ du moteur (5) sur la base du rapport d'une équation V_{1c} · Id et d'une équation ω1·(Id² + Iq²).

2. Procédé selon la revendication 1, caractérisé en ce qu'il comporte l'étape consistant à corriger les signaux de largeur d'impulsion en fonction d'une largeur d'impulsion (T_{λ}) dépendant de la polarité du courant du moteur (5), ladite largeur d'impulsion (T_{λ}) correspondant à une erreur de tension de sortie de l'onduleur due à un temps mort, prévu pour empêcher un court-circuit entre branches positive et négative de l'onduleur (4), et à une chute de tension survenant dans l'état PASSANT dans les composants de puissance à semi-conducteur.

3. Procédé selon la revendication 1, caractérisé en ce qu'il comporte les étapes consistant à
obtenir ladite composante de puissance active Iq à partir d'une valeur moyenne de l'intégrale de l'équation sinθ·iu calculée sur un intervalle égal à un nombre entier de fois un intervalle correspondant à un demi-cycle de la fréquence primaire et obtenir ladite composante de puissance réactive Id à partir de la valeur moyenne de l'intégrale de l'équation - cosθ·iu calculée sur l'intervalle correspondant à un nombre entier de fois un demi-cycle de la fréquence primaire,
fournir l'angle (θ) en tant que phase rotationnelle du vecteur tension d'excitation en courant alternatif obtenu en intégrant la commande de fréquence primaire ω1 et le iu défini en tant que courant instantané détecté pendant la modulation sinusoïdale effectuée en phase.

4. Procédé selon la revendication 1, caractérisé en ce que la résistance combinée r₁ + r₂ et l'inductance de fuite combinée l₁ + l₂ sont calculées sur la base des équations${\text{r}}_{\text{1}} {\text{+ r}}_{\text{2}} {\text{= V}}_{\text{1c}} {\text{· Iq/[1,5 · (Id}}^{\text{2}} {\text{+ Iq}}^{\text{2}} \text{)]}$${\text{l}}_{\text{1}} {\text{+ l}}_{\text{2}} {\text{= V}}_{\text{1c}} {\text{· Id/[1,5 · (Id}}^{\text{2}} {\text{+ Iq}}^{\text{2}} \text{) · ω1].}$

5. Procédé pour mesurer l'auto-inductance primaire (L₁) d'un moteur à courant alternatif, caractérisé en ce qu'il comporte les étapes consistant à
commander un onduleur sur la base d'une valeur de commande de fréquence primaire ω1 et d'une valeur de commande de tension primaire V_{1c}, afin d'entraîner ledit moteur à courant alternatif (5) à une vitesse constante,
calculer à ce niveau une composante de puissance active Iq' définie par une composante vectorielle de tension primaire d'un vecteur courant I₁ du moteur (5) et une composante de puissance réactive Id' définie par une composante vectorielle de tension retardée de 90° par rapport à la composante vectorielle de tension primaire dudit vecteur courant (I₁) du moteur en utilisant une phase obtenue en intégrant ladite valeur de commande de fréquence primaire ω1 et un courant détecté du moteur, et
calculer l'auto-inductance primaire L₁ en utilisant une résistance primaire r₁ et une inductance de fuite primaire et secondaire combinée (Lₓ = I₁ + I₂) du moteur (5) qui est mesurée auparavant conformément au procédé de la revendication 1 sur la base de l'une des équations suivantes :

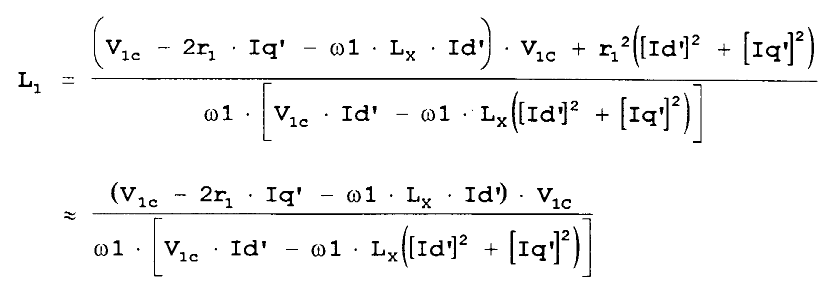

6. Unité de commande pour commander un moteur à courant alternatif (5) à l'aide d'un dispositif à onduleur comportant un onduleur (4) destiné à transformer une tension continue en un courant alternatif afin d'alimenter ledit moteur (5) avec le courant alternatif et une unité de commande (6) pour commander l'amplitude et la largeur d'impulsion de la tension de sortie dudit onduleur (4),
caractérisée en ce qu'elle comporte en outre
des moyens pour produire des signaux d'excitation en courant alternatif monophasé (S_{UP}, S_{Un}, S_{VP}, S_{Vn}, S_{WP}, S_{Wn}) basés sur une valeur de commande de fréquence primaire ω1 et une valeur de commande de tension primaire V_{1c} dudit onduleur (4), et une valeur de courant détectée du moteur,
des moyens pour commander le moteur (5) conformément à l'excitation d'un courant alternatif monophasé basé sur lesdits signaux d'excitation en courant alternatif monophasé (S_{Un}, ... S_{Wn}) en envoyant des signaux de largeur d'impulsion (S_{UP}, S_{Un}) d'une onde sinusoïdale vers uniquement une phase parmi les trois phases du moteur (5) et en envoyant les signaux de largeur d'impulsion (S_{VP}, S_{Vn}, S_{WP}, S_{wn}) de taux de conduction 1/2 vers les deux autres phases du moteur,
des moyens pour calculer une composante de puissance active de courant Iq et une composante de puissance réactive de courant Id pour le moteur (5) sur la base de la phase obtenue en intégrant ladite commande de fréquence primaire ω1 et une valeur de courant détectée du moteur (5) commandé conformément à l'excitation en courant alternatif monophasé, et
des moyens pour mesurer une résistance primaire et secondaire combinée r₁ + r₂ du moteur (5) sur la base du rapport d'une équation V_{1c}· Iq et d'une équation Id² + Iq², et une inductance de fuite primaire et secondaire combinée I₁ + I₂ du moteur (5) sur la base du rapport d'une équation V_{1c} · Id et d'une équation ω1·(Id² + Iq²).

7. Unité de commande selon la revendication 6, caractérisée en ce qu'elle comporte
des moyens (26) pour corriger les signaux de largeur d'impulsion en fonction d'une largeur d'impulsion (T_{λ}) dépendant de la polarité du courant du moteur (5), ladite largeur d'impulsion (T_{λ}) correspondant à une erreur de tension de sortie de l'onduleur due à un temps mort, prévu pour empêcher un court-circuit entre branches positive et négative de l'onduleur (4), et à une chute de tension survenant dans l'état PASSANT dans les composants de puissance à semi-conducteurs.

8. Unité de commande selon la revendication 6, caractérisée en ce qu'elle comporte en outre
des moyens pour calculer la résistance combinée r₁ + r₂ et l'inductance de fuite combinée l₁ + l₂ sur la base des équations${\text{r}}_{\text{1}} {\text{+ r}}_{\text{2}} {\text{= V}}_{\text{1c}} {\text{· Iq/[1,5 · (Id}}^{\text{2}} {\text{+ Iq}}^{\text{2}} \text{)]}$${\text{l}}_{\text{1}} {\text{+ l}}_{\text{2}} {\text{= V}}_{\text{1c}} {\text{· Id/[1,5 · (Id}}^{\text{2}} {\text{+ Iq}}^{\text{2}} \text{) · ω1].}$

9. Unité de commande pour commander un moteur à courant alternatif (5) comportant
des moyens pour déterminer l'auto-inductance primaire (L₁) du moteur à courant alternatif (5),
caractérisée en ce qu'elle comporte
des moyens pour commander un onduleur (4) sur la base d'une valeur de commande de fréquence primaire ω1 et d'une valeur de commande de tension primaire V_{1c}, afin d'entraîner ledit moteur à courant alternatif (5) à une vitesse constante,
des moyens pour calculer à ce niveau une composante de puissance active Iq' définie par une composante vectorielle de tension primaire d'un vecteur courant I₁ du moteur (5) et une composante de puissance réactive Id' définie par une composante vectorielle de tension retardée de 90° par rapport à la composante vectorielle de tension primaire dudit vecteur courant (I₁) du moteur en utilisant une phase obtenue en intégrant ladite valeur de commande de fréquence primaire ω1 et un courant détecté du moteur, et
des moyens pour calculer l'auto-inductance primaire L₁ en utilisant une résistance primaire r₁ et une inductance de fuite primaire et secondaire combinée (Lₓ = l₁ + l₂) du moteur (5) qui est mesurée auparavant conformément au procédé de la revendication 1 sur la base de l'une des équations suivantes :
